# EUROPEAN PATENT APPLICATION

(11) **EP 4 645 188 A1**
(43) Date of publication of application: **05.11.2025**
(21) Application number: 25172656.8
(22) Date of filing: 25.04.2025
(51) Int. Cl.: G06Q 10/087

(54) **METHOD AND SYSTEM FOR WAREHOUSE MANAGEMENT FOR REPLENISHING AND PICKING INVENTORY IN FORWARD PICK AREA**

(30) Priority: 29.04.2024 US 202418648534
(71) Applicant: Grey Orange Inc., Roswell, GA 30076 (US)
(72) Inventor: Das, Sarbajit, 700047 Kolkata (IN); Tiwary, Sumit, 273014 Gorakhpur (IN); Gupta, Mayank, 560035 Bengaluru (IN)
(74) Representative: Nirwan, Prajwal

(57) **Abstract**

A method of warehouse management for replenishing and picking inventory in forward pick area of warehouse comprising, receiving replenishment instruction of stock keeping units of inventory items to be replenished in forward pick area, causing storage totes filled with inventory items to move on conveyor in forward pick area, directing Ranger Tote to Person bot to collect storage totes and store on multi-level flow rack, communicating order signal to operator devices and Ranger Assist bot when new order is received from warehouse management server signal, directing RA bot towards drop-off location associated with tote exchange function, wherein RA bot carries order tote comprising second inventory items of new order, and then operating auto tote exchanger at drop-off location to execute tote exchange function in which order tote is collected from RA bot and automatically exchanged with empty tote acquired from multi-level take-away conveyor.

## Description

### CROSS-REFERENCE TO RELATED APPLICATIONS/INCORPORATION BY REFERENCE

### FIELD

Various embodiments of the disclosure relate to warehouse automation technology. More specifically, various embodiments of the disclosure relate to a method and a system of warehouse management for replenishment and picking inventory in a forward pick area of a warehouse.

### BACKGROUND

Advancements in warehouse automation technologies have pushed the development of warehouse management systems for automated inventory pickup, sortation, and/or putting away different types of inventory items for multi-line orders in fulfillment and distribution areas of a warehouse. Moreover, warehouse management includes a bulk storage and a forward pick storage that are used to arrange the different types of inventory items together in order to locate each of the different types of inventory items. However, replenishing the different types of inventory items from the bulk storage to the forward pick area is a time-consuming task, potentially resulting in a lack of SKU availability for sales and subsequent revenue losses. Further, in a case where there is a demand for frequent shipments and shorter delivery times, the output of conventional warehouse management systems suffers based on throughput variability or even with a fall in throughput within and across shifts due to human factors that lead to an error-prone order fulfillment and inflated order picking and processing costs in the supply chain, which may be undesirable.

Further limitations and disadvantages of conventional and traditional approaches will become apparent to one of skill in the art, through the comparison of described systems with some aspects of the present disclosure, as set forth in the remainder of the present application and with reference to the drawings.

### SUMMARY

A method and a system of warehouse management for replenishment and picking inventory in a forward pick area of a warehouse, substantially as shown in, and/or described in connection with, at least one of the figures, as set forth more completely in the claims.

These and other features and advantages of the present disclosure may be appreciated from a review of the following detailed description of the present disclosure, along with the accompanying figures in which like reference numerals refer to like parts throughout.

### BRIEF DESCRIPTION OF THE DRAWINGS

FIG. 1A is a block diagram illustrating a system for warehouse management for replenishing and picking inventory in a forward pick area of a warehouse, in accordance with another embodiment of the present disclosure;
FIG. 1B is a block diagram that illustrates various exemplary components of a warehouse management server, in accordance with an embodiment of the present disclosure;
FIG. 2A is a diagram illustrating a Ranger Tote to Person (RTTP) bot, in accordance with another embodiment of the present disclosure;
FIG. 2B is a diagram illustrating a storage tote, in accordance with another embodiment of the present disclosure;
FIG. 2C is a diagram illustrating a Ranger Assist (RA) bot, in accordance with another embodiment of the present disclosure;
FIG. 2D is a diagram illustrating a multi-level flow rack in accordance with another embodiment of the present disclosure;
FIG. 2E is a diagram illustrating an Auto tote exchanger, in accordance with another embodiment of the present disclosure;
FIG. 3 is a diagram illustrating a first plurality of storage totes filled with one or more first inventory items inducted on a conveyor, in accordance with an embodiment of the present disclosure;
FIG. 4 is a diagram illustrating a movement of one or more storage totes filled with one or more first inventory items through a conveyor, in accordance with an embodiment of the present disclosure;
FIG. 5 is a diagram illustrating the movement of an RTTP bot to a first location designated by a warehouse management server, in accordance with an embodiment of the present disclosure;
FIG. 6 is another diagram illustrating the movement of an RTTP bot to a first location designated by a warehouse management server, in accordance with an embodiment of the present disclosure;
FIG. 7 is a diagram illustrating the movement of a RA bot around the aisle region corresponding to one or more specific pickup locations, in accordance with an embodiment of the present disclosure;
FIG. 8 is a diagram illustrating an operator and the RA bot coordinating to pick one or more storage totes filled with inventory items from the multi-level flow rack, in accordance with an embodiment of the present disclosure;
FIG. 9 is a diagram illustrating an exemplary scenario of the picking of the new order items and putting the corresponding order items into the ordered tote, in accordance with an embodiment of the present disclosure;
FIG. 10 is a diagram illustrating the top view of the auto tote exchanger connected with a multi-level take-away conveyor, in accordance with an embodiment of the present disclosure; and
FIG. 11 is a flowchart of a method of warehouse management for replenishing and picking inventory in a forward pick area of a warehouse, in accordance with an embodiment of the present disclosure.

### DETAILED DESCRIPTION

The following described implementations may be found in a disclosed system and method of warehouse management for replenishing and picking inventory in a forward pick area of a warehouse. The disclosed system provides a solution to minimize a loss of throughput and optimize the total cycle time in a pickup of different types of inventory items (e.g., Fast-moving consumer goods (FMCG), durable goods, or other consumer goods) from the one or more inventory items. The movement of totes from bulk storage to the forward pick area streamlines the replenishment process with reduced time and effort that is required for restocking the one or more inventory items, leading to an increased efficiency. The RTTP bot is configured to handle the one or more storage totes with an improved efficiency and reduced workforce. The system is configured to minimize errors and the utilization of multi-level flow racks and take-away conveyors optimizes space utilization in order to facilitate smooth and reliable movement of the one or more inventory items within the forward pick area.

In the following description, reference is made to the accompanying drawings, which form a part hereof, and which are shown, by way of illustration, various embodiments of the present disclosure.

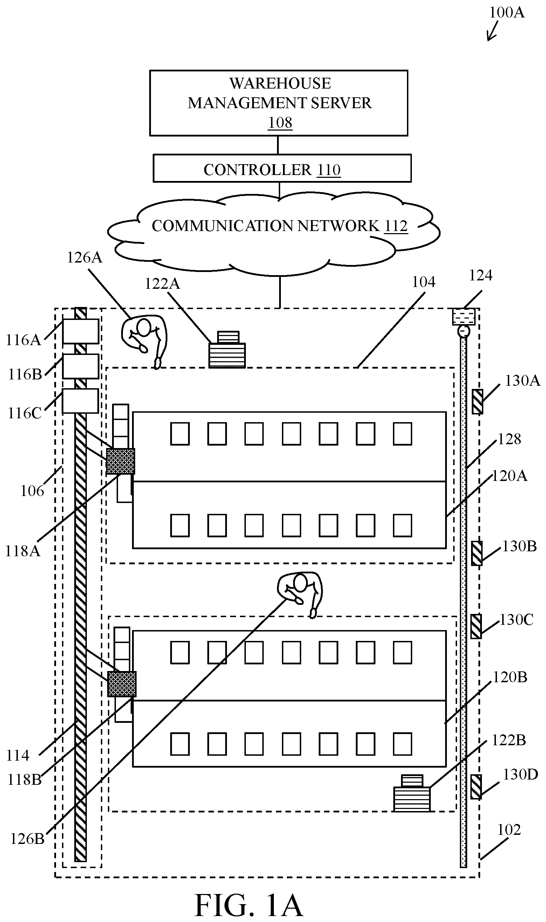

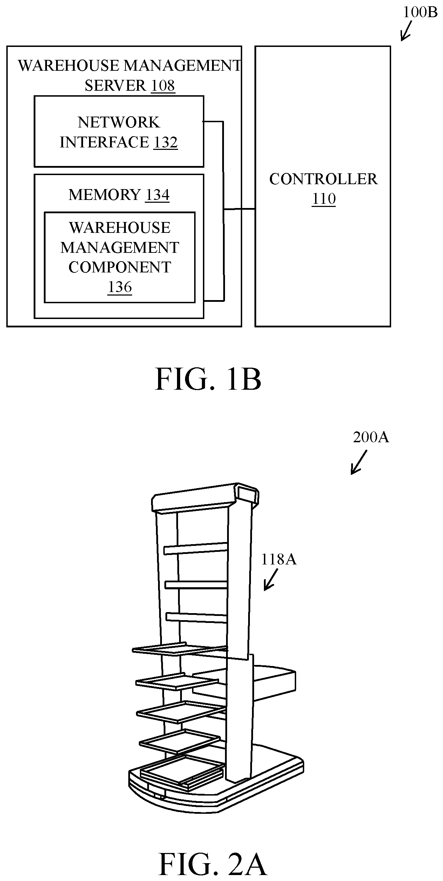

FIG. 1A is a block diagram illustrating a system for warehouse management for replenishing and picking inventory in a forward pick area of a warehouse, in accordance with another embodiment of the present disclosure. With reference to FIG. 1, there is shown a block diagram of a system 100A of warehouse management for replenishing and picking inventory in the forward pick area of the warehouse. The system 100A includes a warehouse 102 including a forward pick area 104, a bulk storage area 106, a warehouse management server 108, and a communication network 112.

The warehouse 102 refers to a facility where the outlined processes and systems, such as order processing, inventory management, and automation integration, take place. Furthermore, the warehouse 102 is configured to receive, store, and distribute inventory items. Furthermore, the bulk storage area 106 includes a conveyor 114 and the one or more storage tote (e.g., a first storage tote 116A, a second storage tote 116B, and a third storage tote 116C) filled with inventory items. Moreover, the forward pick area 104 includes a one or more Ranger Tote to Person (RTTP) bots (e.g., a first RTTP bot 118A and a second RTTP bot 118B), a one or more multi-level flow racks (e.g., a first multi-level flow rack 120A and a second multi-level flow rack120B), a one or more Ranger Assist (RA) bots (e.g., a first RA bot 122A and a second RA bot 122B), an auto tote exchanger 124, a one or more operator (e.g., a first operator 126A and a second operator 126B), a multi-level take-away conveyor 128, and a one or more packing stations (e.g., a first packing station 130A, a second packing station 130B, a third packing station 130C and a fourth packing station 130D). The bulk storage area 106 in the warehouse 102 serves as a place for the systematic storage of inventory items that do not require frequent access but are essential for maintaining inventory levels. Furthermore, the bulk storage area 106 is strategically positioned to accommodate inventory with lower turnover rates, typically the inventory items that are not in constant demand. Moreover, the bulk storage area 106 plays a crucial role in the system 100A for warehouse management by housing a reserve of inventory items that can be replenished to the forward pick area 104 as needed. Furthermore, the bulk storage area 106 includes the conveyor 114 and plurality of storage totes (e.g., a first plurality of storage totes that includes the first storage tote 116A, the second storage tote 116B, and the third storage tote 116C).

The forward pick area 104 in the warehouse 102 refers to a section that is positioned strategically near packing stations to focus on optimizing the order fulfillment process. Additionally, the proximity of the forward pick area 104 to packing stations facilitates a seamless transition from picking to packing, reducing order processing times. Furthermore, the continuous replenishment from the bulk storage area 106 maintains a consistent supply of popular items in the forward pick area 104. The forward pick area 104 includes the one or more Ranger Tote to Person (RTTP) bots (e.g., the first RTTP bot 118A and the second RTTP bot 118B), the one or more flow racks (e.g., the first multi-level flow rack 120A and the second flow rack120B), the one or more Ranger Assist (RA) bots (e.g., the first RA bot 122A and the second RA bot 122B), the Auto Tote Exchanger 124, the one or more operator (e.g., the first operator 126A and the second operator 126B) the multi-level take-away conveyor 128 and the one or more packing stations (the first packing station 130A, the second packing station 130B, the third packing station 130C and the fourth packing station 130D).

The warehouse management server 108 is configured to supervise and coordinate different tasks within the warehouse 102, such as receiving, processing orders,, upstream integration, inventory management at warehouse level, work forecasting, applying business logics, and the like. In an implementation, the warehouse management server 108 is a specialized server that handles multiple functionalities involved in day-to-day operations of the warehouse 102. In an implementation, the warehouse management server 108 includes a controller 110.

The controller 110 refers to a computational element (or a warehouse execution system), which is configured to execute the domain-specific functions in the warehouse management server 108, such as workflow orchestration, resource allocation and optimization, order processing, multi-agent orchestration, inventory orchestration, task allocation, order distribution, fulfillment of business logic, workforce forecasting, real-time visualization and analytics, and the like. The controller 110 may refer to one or more individual controllers, processing devices, and various elements associated with a processing device that may be shared by other processing devices. In an implementation, the controller 110 (or the warehouse execution system) is located outside the warehouse management server 108 integrated with an application programming interface (API). Examples of the controller 110 may include but are not limited to, a hardware processor, a digital signal processor (DSP), a microprocessor, a microcontroller, a complex instruction set computing (CISC) processor, an application-specific integrated circuit (ASIC) processor, a reduced instruction set (RISC) processor, a very long instruction word (VLIW) processor, a state machine, a data processing unit, a graphics processing unit (GPU), and other processors or control circuitry.

The communication network 112 (or a warehouse control system) includes a medium (e.g., a communication channel) through which the controller 110 (or the warehouse execution system) communicates with the different components of the warehouse 102 and controls the navigation of different bots. The communication network 112 may be a wired or wireless communication network. Examples of the communication network 112 may include, but are not limited to, Internet, a Local Area Network (LAN), a wireless personal area network (WPAN), a Wireless Local Area Network (WLAN), a wireless wide area network (WWAN), a cloud network, a Long-Term Evolution (LTE) network, a Metropolitan Area Network (MAN), and/or the Internet.

There is provided the system 100A of warehouse management for replenishing and picking inventory in a forward pick area of the warehouse 102. In other words, the system 100A is used for replenishing and picking up inventory in the forward pick area 104 of the warehouse 102 with reduced overall time consumption with precise and an efficient placement of the storage totes on multi-level flow racks. Moreover, the system 100A is configured to ensure a high volume of efficient and timely replenishing and picking activities within the warehouse 102.

In operation, the controller 110 of the system 100A is configured to receive a replenishment instruction indicative of one or more stock-keeping units (SKUs) of one or more inventory items to be replenished in the forward pick area 104. The one or more SKUs refers to a unique identifier assigned to a specific product or inventory item in order to allow the system 100A to track and manage products or variants individually. In an implementation, the replenishment instruction is required to move the required inventory items from the bulk storage area 106 to the forward pick area 104 to ensure that the forward pick area 104 is adequately stocked with the required inventory items, enabling efficient order fulfillment, and minimizing the risk of stock-outs. As a result, by receiving the replenishment instruction, the controller 110 is configured to coordinate the subsequent actions, such as directing the Ranger Tote to Person (RTTP) bot to collect and transport the specified inventory items from the bulk storage area 106 to the forward pick area 104 and storing them on the multi-level flow racks for easy access during order picking.

In accordance with an embodiment, the controller 110 is further configured to detect the one or more stock-keeping units (SKUs) of the one or more first inventory items to be replenished in the forward pick area 104 of the warehouse 102. In an example, the controller 110 is configured to detect the first stock-keeping unit of the first inventory item to be replenished in the forward pick area 104 of the warehouse 102. Similarly, the controller 110 is configured to detect a second stock-keeping unit of a second inventory item to be replenished in the forward pick area 104 of the warehouse 102. As a result, by virtue of detecting the one or more SKUs of the one or more first inventory items to be replenished in the forward pick area 104, the system 100A is configured to ensure the availability of the one or more inventory items in the warehouse 102, such as by initiating the required actions that are required to be taken in order to restock the corresponding one or more inventory items.

Furthermore, the controller 110 of the system 100A is configured to cause the first plurality of storage totes filled with the one or more first inventory items to move on the conveyor 114 from the bulk storage area 106 of the warehouse 102 to one or more aisle induction points in the forward pick area 104. In an example, the controller 110 is configured to cause the first plurality of storage totes (e.g., the first storage tote 116A, the second storage tote 116B, and the third storage tote 116C) filled with the one or more first inventory items to move on the conveyor 114 from the bulk storage area 106 of the warehouse 102 to one or more aisle induction points in the forward pick area 104. The movement of the one or more inventory items on the conveyor 114 is caused to streamline the transferring of the first plurality of storage totes filled with specific inventory items from the bulk storage area to positioned aisle induction points in the forward pick area. As a result, the system 100A is configured to minimize the manual intervention thereby reducing the risk of errors with an improved the overall speed of replenishment operations. Furthermore, the controller 110 is configured to direct a Ranger Tote to Person (RTTP) bot to automatically collect the first plurality of storage totes filled with the one or more inventory items from the conveyor 114 and store them on a multi-level flow rack present in the forward pick area 104. In an implementation, the controller 110 is configured to direct the first RTTP bot 118A to automatically collect the first plurality of storage totes filled with the one or more inventory items from the conveyor 114 and store them in a specific location on the multilevel flow rack suggested by the controller 110 present in the forward pick area 104. In another implementation, the controller 110 is configured to direct the second RTTP bot 118B to automatically collect the first plurality of storage totes filled with the one or more inventory items from the conveyor 114 and store them on a multi-level flow rack present in the forward pick area 104. Moreover, the Ranger Tote to Person (RTTP) bots (e.g., the first RTTP bot 118A and the second RTTP bot 118B), are referred to as the RTTP bots referred to as autonomous robotic systems designed for material handling and order fulfillment within the warehouse 102. In an implementation, the RTTP bots are equipped with advanced navigation capabilities, sensors, and a tote-carrying mechanism. As a result, by utilizing the RTTP bot (i.e., the first RTTP bot 118A and the second RTTP bot 118B), the system 100A is configured to reduce manual labor, streamline the movement of inventory totes, and ensure the systematic storage of the items on the multi-level flow rack (e.g., a first multi-level flow rack 120A and a second multi-level flow rack 120B) thereby minimizing delays in making inventory available for order fulfillment in the forward pick area 104. Firstly, the RTTP bot (i.e., the first RTTP bot 118A and the second RTTP bot 118B) navigates the warehouse floor in the warehouse 102. Thereafter, the RTTP bot is configured to collect the first plurality of storage totes filled with the one or more inventory items from the conveyor 114. Finally, the controller 110 is configured to cause the RTTP bot to store the collected first plurality of storage totes filled with the one or more inventory items on the multi-level flow racks (i.e., the first multi-level flow rack 120A and the second multi-level flow rack 120B) present in the forward pick area 104. As a result, the system 100A is configured to reduce reliance on manual labor and enhance the operational efficiency and reliability with reduced errors.

In accordance with an embodiment, the controller 110 is configured to cause the RTTP bot to induct three or more storage totes filled with the one or more first inventory items into the RTTP bot via the conveyor 114 in a single collecting session. In an implementation, the controller 110 is configured to cause the first RTTP bot 118A to induct three or more storage totes (e.g., the first storage tote 116A, the second storage tote 116B, and the third storage tote 116C) filled with the one or more first inventory items into the RTTP bot via the conveyor 114 in a single collecting session. In another implementation, the controller 110 is configured to cause the second RTTP bot 118B to induct three or more storage totes (e.g., the first storage tote 116A, the second storage tote 116B, and the third storage tote 116C) filled with the one or more first inventory items into the RTTP bot via the conveyor 114 in a single collecting session. As a result, the induction of three or more storage totes filled with the one or more first inventory items into the RTTP bot via the conveyor 114 in a single collecting session is configured to reduce the overall time required for replenishing inventory items, improving throughput, and minimizing operational delays in the forward pick area 104.

In accordance with an embodiment, the controller 110 is configured to cause the RTTP bot to move to a first location designated by the warehouse management server 108 before storing one or more storage totes of the first plurality of storage totes at a first position coordinated on the multi-level flow rack. In an implementation, the controller 110 is configured to cause the first RTTP bot 118A to move to a first location designated by the warehouse management server 108 before storing one or more storage totes of the first plurality of storage totes at a first position coordinated on the multi-level flow rack (i.e., the first multi-level flow rack 120A, and the second multi-level flow rack 120B). In another implementation, the controller 110 is configured to cause the second RTTP bot 118B to move to a first location designated by the warehouse management server 108 before storing one or more storage totes of the first plurality of storage totes at a first position coordinated on the multi-level flow rack (i.e., the first multi-level flow rack 120A, and the second multi-level flow rack 120B). In other words, the controller 110 is configured to cause the RTTP bot, specifying its movement to a predetermined location designated by the warehouse management server 108. Thereafter, the RTTP bot is directed by the controller 110 to store the one or more storage totes of the first plurality of storage totes (e.g., the first storage tote 116A, the second storage tote 116B, and the third storage tote 116C) at a first position on the multi-level flow rack to ensure precise positioning and storage of the one or more storage totes of the first plurality of storage totes. As a result, by directing the RTTP bot to move to a first location as designated by the warehouse management server 108 before storing the storage totes, the system 100A is configured to ensure an organized and systematic placement of the different types of inventory items. In addition, the system 100A is configured to improve the accuracy of the placement of the one or more storage totes thereby reducing the likelihood of errors and contributing to an organized and streamlined inventory storage process, optimizing space utilization on the multi-level flow rack, resulting in improved inventory accessibility and order fulfillment capabilities.

In accordance with an embodiment, the controller 110 is further configured to batch order lines based on a proximity of locations of the SKUs of the one or more inventory items within the same order for the order pick or batch orderliness of picking the SKUs of the one or more inventory items for a batch pick. Beneficially, the batching of the order lines based on the proximity of the locations, ensures RA bots to use most optimal path to pick all allotted items in a trip, and ensures timely and effective retrieval operations along with the enhancement of the overall performance of the inventory management process in the warehouse 102.

In an implementation, the controller 110 is configured to receive the order data from the warehouse management server 108 and batches the orders to the one or more storage totes based on the orders solely. For example, a first storage tote is assigned with one unique order of multiple SKUs or items. Similarly, another storage is assigned with another unique order of multiple SKUs or items. Moreover, the one or more storage totes that are assigned to the RA bot have all orderliness that belongs to a one single order. Hence, whenever a storage tote is allotted to a RA Bot it belongs to one single order and once the picking is done the corresponding storage totes are directed to the packing station directly.

In another implementation, the controller 110 is configured to receive the order data from the warehouse management server 108 and batches the multiple orders to the storage totes based on the SKU/ item solely. For example, one storage tote is assigned with single SKU or items of the multiple orders. Moreover, the storage totes that are assigned to RA bot have all the orderliness that belongs to a one single SKU. Hence, whenever a storage tote is allotted to the RA Bot, it belongs to one single SKU and once the picking is done the storage totes are directed to order consolidation area where the picked SKUs/items from multiple totes are consolidated based on the order and then sent to the packing station.

In accordance with an embodiment, the controller 110 is further configured to cause the RA bot to move around a plurality of different aisle regions corresponding to the one or more specific pickup locations in the forward pick area 104 to engage with different operators. Moreover, each operator operates a corresponding operator device of the one or more operator devices in the forward pick area 104. In an implementation, the controller 110 is configured to cause the first RA bot 122A to move around a plurality of different aisle regions corresponding to the one or more specific pickup locations in the forward pick area 104 to engage with the first operator 126A. In another implementation, the controller 110 is configured to cause the second RA bot 122B to move around a plurality of different aisle regions corresponding to the one or more specific pickup locations in the forward pick area 104 to engage with the second operator 126B. The movement of the RA bots around a plurality of different aisle regions corresponding to the one or more specific pickup locations in the forward pick area 104 to engage with different operators facilitates seamless communication and collaboration in the dynamic environment of the forward pick area 104. As a result, the RA bot is configured to adapt to the changing demands thereby reducing idle time and enhancing the overall responsiveness in the forward pick area 104. In addition, the dynamic engagement with the operator (i.e., the first operator 126A and the second operator 126B) contributes to a more coordinated and agile fulfillment of the orders within the warehouse 102.

Furthermore, the controller 110 is configured to communicate an order signal to one or more operator devices and the Ranger Assist (RA) bots when a new order is received from the warehouse management server 108. Moreover, the signal includes a pick order and an indication of a route to reach one or more specific pickup locations in a sequence in the forward pick area 104. Firstly, the new order has been received from the warehouse management server 108. Thereafter, the controller 110 is configured to communicate the order signal to the one or more operator devices and the RA bots, facilitating human intervention, and to the Ranger Assist (RA) bot, enabling automated assistance. As a result, the controller 110 is configured to ensure swift and coordinated actions in response to new orders with enhanced efficiency, minimizing delays, and contributing to a well-organized sequence of tasks for fulfilling customer orders.

Furthermore, the controller 110 is configured to direct the RA bot towards a drop-off location associated with a tote exchange function. Moreover, the RA bot carries the at least one order tote including one or more second inventory items of the new order. The drop-off location refers to a predetermined point within the warehouse 102 where certain operations, such as tote exchange functions, are executed. Moreover, the tote exchange function refers to a systematic swapping or replacement of the storage totes that are used for transporting the one or more inventory items within the warehouse 102. In other words, the drop-off location associated with the tote exchange function serves as a point where the RA bot can deposit or exchange totes, facilitating the seamless flow of goods and information within the system 100A. Additionally, the at least one order tote refers to a container designated for holding items associated with the new order and the second inventory item refers to different inventory items belonging to a new order that are stored within the order tote. By directing the RA bot to a predetermined drop-off location associated with the tote exchange function, the controller 110 is configured to ensure an efficient handling of the ta least one order totes containing the one or more second inventory items of the new order to optimize the transition between order picking and subsequent order processing stages, contributing to a well-coordinated and automated workflow.

Furthermore, the controller 110 is configured to operate the auto tote exchanger 124 at the drop-off location to execute the tote exchange function in which the at least one order tote is collected from the RA bot and automatically exchanged with an empty tote acquired from the multi-level take-away conveyor 128. The auto tote exchanger 124 refers to a component, which is designed to facilitate the exchange of totes that are used for transporting items within the warehouse 102. Moreover, the auto tote exchanger 124 includes two forks, an upper fork 202 and a lower fork 204, both capable of vertical movement. Moreover, the upper fork 202 is specifically designed for handling empty totes, while the lower fork 204 takes on the responsibility of collecting order totes from the RA bots. Furthermore, the Auto tote exchanger 124 interfaces with the multi-level take-away conveyor 128 that allows for the efficient transportation of totes across different levels within the warehouse 102.

In accordance with an embodiment, the auto tote exchanger 124 includes a first fork and a second fork disposed over the first fork. Moreover, the first fork and the second fork are vertically movable in the auto tote exchanger with respect to each other, and the at least one order tote is collected at the first fork from the RA bot by the auto tote exchanger 124. In other words, the first fork and the second fork are arranged in a vertical manner, with the second fork positioned over the first fork. Moreover, such an arrangement enables the auto tote exchanger 124 to vertically move the forks with respect to each other to facilitate the efficient and precise collection of order totes from the RA bot. The vertical mobility of the forks, combined with the specific arrangement, allows for a controlled and adaptable mechanism to handle totes of varying sizes or configurations to ensure a smooth and reliable tote exchange process, minimizing the risk of errors and optimizing the overall efficiency of the operations of the warehouse 102.

In accordance with an embodiment, the auto tote exchanger 124 is further configured to collect the empty tote at the second fork from the multi-level take-away conveyor 128. By collecting the empty tote by the second fork from the multi-level take-away conveyor 128, the system 100A is configured to ensure a smooth transition between processing orders and preparing totes for future use.

In accordance with an embodiment, the auto tote exchanger 124 is further configured to adjust the height of the second fork of the auto tote exchanger 124 until the height of the second fork is on the same level as the height of the RA bot to push the collected empty tote onto the RA bot. The auto tote exchanger 124 is configured to adjust the height of the second fork until it aligns with the height of the RA bot. Moreover, such an adjustment is made to facilitate the smooth transfer of the collected empty tote from the second fork onto the RA bot and ensure a seamless and coordinated exchange between the auto tote exchanger and the RA bot. By aligning the height of the second fork with that of the RA bot, the system 100A ensures that the empty tote can be efficiently and accurately pushed onto the RA bot to optimize the tote exchange process, reducing the risk of errors, and enhancing overall efficiency.

In accordance with an embodiment, the auto tote exchanger 124 is further configured to place the at least one order tote collected at the first fork at a first level of the multi-level take-away conveyor 128 to reach a packing station. By placing the at least one order tote collected at the first fork at the first level of the multi-level take-away conveyor 128, the system 100A is configured to allow the seamless transition of totes to the packing station.

Advantageously, by considering both average and peak scenarios for picking volumes, the system 100A is configured to accommodate fluctuations in demand in order to ensure an efficient resource utilization and avoid over-provisioning or under-provisioning of resources. The system 100A is configured to calculate the required number of the RTTP bot, and the RA bots based on the operational parameters, such as the number of shifts, working hours, number of replenishment totes per RTTP bot, the number of picking totes per RA bot minimizing waste and maximizing productivity, total units, total locations , units per line , lines per tote to calculate RA Bots and the number of Pickers required. By utilizing the RTTP bot, the RA bots, and the auto tote exchanger 124, enabling parallel order picking and reducing potential bottlenecks. The system 100A is configured to consider the available storage area dimensions and aisle widths to optimize the layout and storage capacity. By utilizing multi-level flow racks, the system 100A maximizes vertical space utilization, increasing the number of stock-keeping units (SKUs) that can be stored in the available area. The system 100A is configured to provide key performance indicators (KPIs) such as Units Per Hour (UPH), Totes Per Hour (TPH), and operator count to enable effective monitoring and continuous improvement of the warehouse operations, ensuring high productivity levels. The system 100A allows the modifications and adjustments, such as enabling multi-floor operations, using the RTTP bot for replenishment, or adjusting the number of totes carried by RA bots to ensure that the system 100A meets changing operational requirements. By considering various operational parameters, such as replenishment volumes, outbound volumes, and storage capacities, the system 100A enables data-driven decision-making, leading to more informed and optimized warehouse management. As a result, the system 100A leverages automation, efficient resource allocation, space optimization, and adaptability to enhance operational efficiency, productivity, and scalability within the warehouse 102. In addition, the system 100A is used to follow a strict service level agreement (SLA) and reduce the order breach to an upper limit of 0.001%.

FIG. 1B is a block diagram that illustrates various exemplary components of a warehouse management server, in accordance with an embodiment of the present disclosure. FIG. 1B is described in conjunction with elements from FIG. 1A. With reference to FIG. 1B, there is shown a block diagram 100B that includes the warehouse management server 108. The warehouse management server 108 includes the controller 110, a network interface 134, and a memory 136. Moreover, the memory 136 includes a warehouse management component 138.

The network interface 134 may include hardware or software that is configured to establish communication between the warehouse 102 and the warehouse management server 108. Examples of the network interface 134 may include but are not limited to a computer port, a network socket, a network interface controller (NIC), and any other network interface device.

The memory 136 is configured to store the data related to orders, executions, inventory items, and the like. Examples of implementation of the memory 136 may include but are not limited to, Electrically Erasable Programmable Read-Only Memory (EEPROM), Dynamic Random-Access Memory (DRAM), Random Access Memory (RAM), Read-Only Memory (ROM), Hard Disk Drive (HDD), Flash memory, a Secure Digital (SD) card, Solid-State Drive (SSD), and/or CPU cache memory. Moreover, the warehouse management component 138 refers to a component that is designed to handle the pre-defined tasks efficiently and may work in conjunction with the system 100A to ensure smooth overall warehouse management. Advantageously, the warehouse management server 108 is configured to store the one or more storage totes of the first plurality of storage totes at a first position coordinate on the multi-level flow rack.

FIG. 2A is a diagram illustrating a Ranger Tote to Person (RTTP) bot, in accordance with another embodiment of the present disclosure. FIG. 2A is described in conjunction with elements from FIG. 1A and FIG. 1B. With reference to FIG. 2A, there is shown a diagram 200A depicting the first RTTP bot 118A (of FIG.1).

The description provided herein pertains specifically to the first RTTP bot (designated as 118A) illustrated in FIG. 2A. It is important to note that while this detailed explanation focuses on the features and functionalities of the first RTTP bot 118A, subsequent RTTP bots may operate in a similar manner within the system 100A (of FIG. 1) of the warehouse management. The specific characteristics, design elements, and functionalities of the subsequent RTTP bots may vary but are anticipated to share foundational principles and operational concepts outlined in this description.

The first RTTP bot 118A is a specialized autonomous robot designed to streamline warehouse operations. The first RTTP bot 118A features a mobile base with wheels or tracks, allowing the first RTTP bot 118A to navigate a warehouse floor independently. Mounted on the mobile base is a vertical lifting mechanism that extends upward to access storage racks or shelves at various heights. The first RTTP bot typically has a gripper or manipulator to securely grasp and move totes. The first RTTP bot 118A may also have an onboard storage space to hold multiple totes during transport. In some examples, the first RTTP bot 118A may have a suite of sensors and navigation software to enable the first RTTP bot 118A to avoid obstacles and efficiently plan its routes through the warehouse environment.

The first RTTP bot 118A functions within the system 100A of the warehouse management to automate replenishment in the forward pick area 104. After receiving replenishment instructions, the first RTTP bot 118A initiates a transfer of the SKU pallets from the bulk storage area 106 to the storage totes, which are then directed to specific aisles via the conveyor 114. The first RTTP bot 118A autonomously collects the storage totes, storing the storage totes on a multi-level flow rack in the forward pick area 104. Additionally, when the orders are received, the first RTTP bot (e.g., the first RTTP bot 118A) engages with operators to fulfill picking requirements, travels to a designated drop-off location, where the auto tote exchanger 124 executes a seamless tote exchange function-collecting order totes and exchanging them with empties from the multi-level take-away conveyor 128.

Moreover, the first RTTP bot 118A is configured to follow specific routes and engage with different operators in the forward pick area 104, contributing to a more organized and systematic picking process. In addition, the first RTTP bot 118A minimizes the time required for replenishment and picking, leading to increased operational efficiency allowing for a higher volume of inventory to be processed in a shorter timeframe.

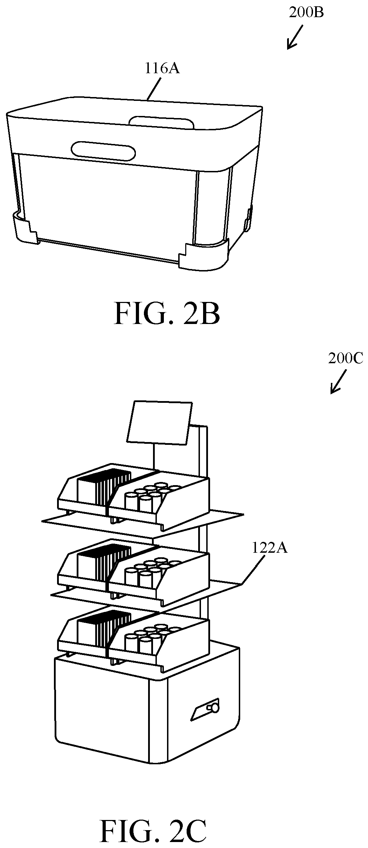

FIG. 2B is a diagram illustrating a storage tote, in accordance with another embodiment of the present disclosure. FIG. 2B is described in conjunction with elements from FIG. 1A and FIG. 1B. With reference to FIG. 2B, there is shown a diagram 200B depicting the first storage tote 116A (of FIG.1).

The description provided herein pertains specifically to the first storage tote (designated as 116A) illustrated in FIG. 2B. It is important to note that while this detailed explanation focuses on the features and functionalities of the first storage tote 116A, subsequent storage tote may operate in a similar manner within the system 100A (of FIG. 1) of the warehouse management. The specific characteristics, design elements, and functionalities of the subsequent storage tote may vary but are anticipated to share foundational principles and operational concepts outlined in this description.

The first storage tote 116A is the pivotal container within the system 100A of the warehouse management, purposefully designed to facilitate the efficient storage and movement of inventory items throughout the facility. Furthermore, the first storage tote 116A comes into play as the storage totes are loaded with the required stock-keeping units (SKUs) from the bulk storage area 106.

Furthermore, the first storage tote 116A operates as a fundamental element in the system of the warehouse management, by facilitating the organized transfer of the SKU pallets from bulk storage to individual totes, the first storage tote 116A ensures a systematic and secure relocation of inventory items which minimizes lead times and enhances overall operational efficiency. Moreover, the integration of the first storage tote 116A with a conveyor system further promotes a smooth and directed movement of inventory within the warehouse102.

FIG. 2C is a diagram illustrating a Ranger Assist (RA) bot, in accordance with another embodiment of the present disclosure. FIG. 2C is described in conjunction with elements from FIG. 1A and FIG. 1B. With reference to FIG. 2C, there is shown a diagram 200C depicting the first RA bot 122A (of FIG.1).

The description provided herein pertains specifically to the first RA bot (designated as 122A) illustrated in FIG. 2C. It is important to note that while this detailed explanation focuses on the features and functionalities of the first RA bot 122A, subsequent RA bots may operate in a similar manner within the system 100A (of FIG. 1) of the warehouse management. The specific characteristics, design elements, and functionalities of the subsequent RA bots may vary but are anticipated to share foundational principles and operational concepts outlined in this description.

The first RA bot 122A represents an advanced robotic system designed to elevate the efficiency of order fulfillment processes within the warehouse 102. Furthermore, the first RA bot 122A plays a crucial role in executing a variety of tasks associated with the picking and distribution of inventory items. Moreover, the first RA bot 122A is responsible for the transportation of order totes containing second inventory items to designated drop-off locations and facilitating the seamless transfer of order totes to the auto tote exchanger 124 while maintaining an efficient flow of inventory items within the warehouse.

The first RA bot 122A contributes to the seamless execution of order-picking activities. Its operation involves multiple steps to ensure efficient and accurate handling of inventory. Furthermore, the controller 110 directs the first RA bot 122A based on a new order signal received from the warehouse management server, the signal includes a pick order and a specific route indication to reach specific pickup locations in the forward pick area 104, then the first RA bot 122A) navigates through different aisle regions, engaging with various operators operating operator devices in the forward pick area. Furthermore, once the order picking is completed, the first RA bot 122A travels back to a designated drop-off location.

Furthermore, after autonomously navigating through the warehouse, interacting with operators, and efficiently collecting items based on the received order signal, the first RA bot 122A streamlines the entire order fulfillment workflow and significantly speeds up the order processing cycle. Moreover, the capability of the first RA bot 122A to move around different aisle regions and engage with various operators enhances adaptability and responsiveness in a dynamic warehouse environment, which contributes to the accuracy, speed, and automation of the order fulfillment process, ultimately optimizing warehouse operations.

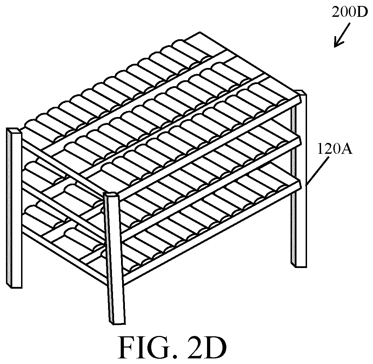

FIG. 2D is a diagram illustrating a multi-level flow rack in accordance with another embodiment of the present disclosure. FIG. 2D is described in conjunction with elements from FIG. 1A and FIG. 1B. With reference to FIG. 2D, there is shown a diagram 200D depicting the first multi-level flow rack 120A (of FIG. 1).

The description provided herein pertains specifically to the first flow rack (designated as 120A) illustrated in FIG. 2D. It is important to note that while this detailed explanation focuses on the features and functionalities of the first multi-level flow rack 120A, subsequent flow racks may operate in a similar manner within the system 100A (of FIG. 1) of the warehouse management. The specific characteristics, design elements, and functionalities of the subsequent flow rack may vary but are anticipated to share foundational principles and operational concepts outlined in this description.

The one or more multi-level flow racks (for e.g., the first multi-level flow rack 120A) are the integral components of warehouse infrastructure and are specialized shelving systems designed to optimize the storage and retrieval of goods, particularly in the forward pick area. Further, the one or more multi-level flow racks (for e.g., a first multi-level flow rack) play a crucial role in storing storage totes filled with stock-keeping units (SKUs). Moreover, the gravity-based design of the multi-level flow racks ensures a continuous flow of goods, as the front-loaded items move forward, making it a well-suited solution for high-density storage and rapid access to frequently picked items in the dynamic warehouse environment.

The first multi-level flow rack 120A has three tiers, as depicted. Each tier of the first multi-level flow rack 120A has a slightly inclined track with rollers at the base. These rollers allow totes or bins to smoothly slide down the track by gravity from the back to the front of the rack. The illustrated rack has vertical supports at the ends and along the sides for stability. It also has dividers or guides on the tracks, likely to separate different lanes and prevent items from rolling into each other. By employing the first multi-level flow rack 120A in the warehouse 102, primarily revolving around enhanced storage efficiency and streamlined retrieval processes, maximizes the utilization of vertical space by offering multiple levels for storage totes or inventory items, which allows for a more organized arrangement of stock-keeping units (SKUs) and ensures that a larger volume of SKUs can be accommodated within a relatively compact footprint, contributing to a significant increase in storage capacity.

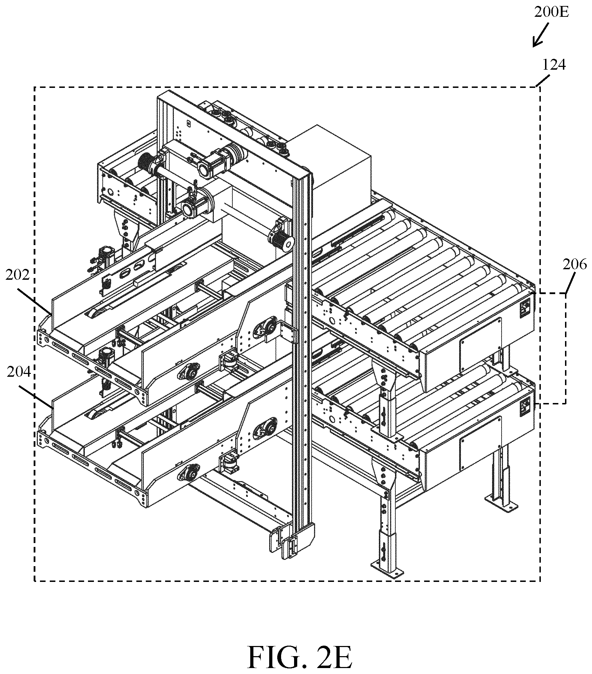

FIG. 2E is a diagram illustrating an Auto tote exchanger, in accordance with another embodiment of the present disclosure. FIG. 2E is described in conjunction with elements from FIG. 1A and FIG. 1E. With reference to FIG. 2E, there is shown a diagram 200E depicting the auto tote exchanger 124 (of FIG.1).

The auto tote exchanger 124 is an automated system integrated into warehouse operations to optimize the exchange of totes during the order fulfillment process. Further, the auto tote exchanger 124 includes two forks, the upper fork 202 and a lower fork 204, both capable of vertical movement. Moreover, the upper fork 202 is specifically designed for handling empty totes, while the lower fork 204 takes on the responsibility of collecting order totes from the RA bots. Furthermore, the auto tote exchanger 124 interfaces with the multi-level take-away conveyor 128 that allows for the efficient transportation of totes across different levels within the warehouse infrastructure.

The auto tote exchanger 124 is equipped with a linear lift system featuring two forks, the upper fork 202 and the lower fork 204 are capable of vertical movement, both the fork serves a distinct purpose in tote handling within the warehouse automation process. Further, the vertical mobility of the upper fork 202 and the lower fork 204 of the auto tote exchanger 124 allows for precise positioning at different levels, ensuring a coordinated exchange process. Moreover, the auto tote exchanger 124 seamlessly executes the tote exchange function, the lower fork 204 collects the order tote, placing it on the conveyor 114, while simultaneously, the upper fork 202 gathers an empty tote, preparing it for placement onto the RA bot, facilitating the smooth transfer of the empty tote onto the bot. With a remarkable throughput of 150 dual tote cycles per hour, the auto tote exchanger 124 significantly enhances the efficiency and accuracy of tote exchanges, contributing to the overall optimization of warehouse operations.

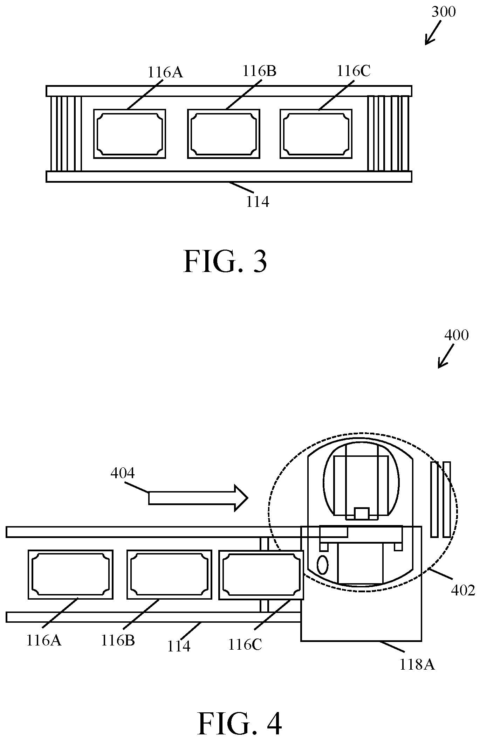

FIG. 3 is a diagram illustrating a first plurality of storage totes filled with one or more first inventory items inducted on a conveyor, in accordance with an embodiment of the present disclosure. FIG. 3 is described in conjunction with elements from FIG. 1A to FIG. 2E. With reference to FIG. 3, there is shown a diagram 300 that depicts the first plurality of storge totes (e.g., the first storage tote 116A, the second storage tote 116B, and the third storage tote 116C) inducted on the conveyor 114.

In an implementation scenario, the first plurality of storage totes includes the three or more storage totes, for example, the first storage tote 116A, the second storage tote 116B, and the third storage tote 116C) filled with the one or more inventory items into the RTTP bot via the conveyor 114 in a single collecting session. In an implementation, the conveyor 114 refers to a mechanical component that manages the movement of the one or more storage totes containing the one or more inventory items. Examples of the conveyor 114 may include but are not limited to a belt conveyor, roller conveyor, chain conveyor, screw conveyor, and the like. As a result, the system 100A is configured to allow an organized and structured movement of the one or more storage totes to the RTTP bot enabling the system 100A to enhance the efficiency of the system 100A, allowing for streamlined processes related to inventory handling and retrieval.

FIG. 4 is a diagram illustrating a movement of one or more storage totes filled with one or more first inventory items through a conveyor, in accordance with an embodiment of the present disclosure. With reference to FIG. 4, there is shown a diagram 400 depicting the one or more storge totes (e.g., the first storage tote 116A, the second storage tote 116B, and the third storage tote 116C) filled with the one or more first inventory items inducted on the conveyor 114.

In an implementation scenario, the controller 110 is configured to cause the first plurality of storage totes (e.g., the first storage tote 116A, the second storage tote 116B, and the third storage tote 116C) filled with the one or more inventory items to move on the conveyor 114 from the bulk storage area 106 of the warehouse 102 to one or more aisle induction points, such as a first aisle induction point 402 in the forward pick area 104, such as in forward direction 404. Furthermore, the controller 110 is configured to direct the first RTTP bot 118A, which is attached to the first aisle induction point 402 to collect the first plurality of storage totes (e.g., the first storage tote 116A, the second storage tote 116B, and the third storage tote 116C) filled with the one or more inventory items from the conveyor 114 and store on a multi-level flow rack present in the forward pick area 104 automatically. As a result, the system 100A ensures a smooth and systematic transfer of the one or more inventory items contributing to optimized and reliable warehouse management.

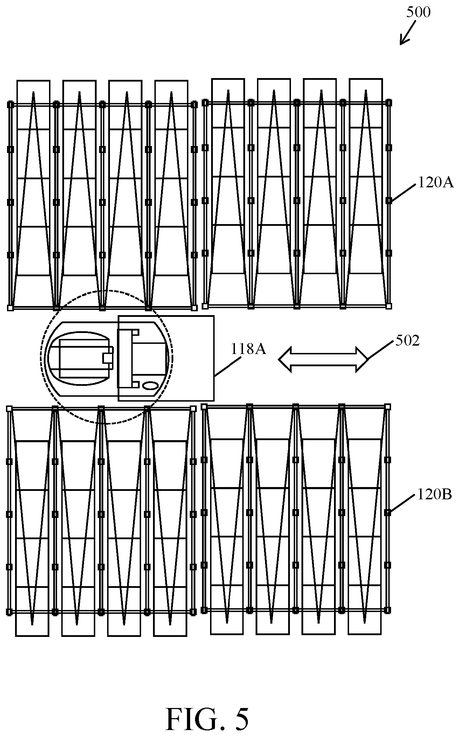

FIG. 5 is a diagram illustrating the movement of an RTTP bot to a first location designated by a warehouse management server, in accordance with an embodiment of the present disclosure. With reference to FIG. 5, there is shown a diagram 500 depicting the first RTTP bot 118A moving around the aisle region between the first multi-level flow rack 120A and the second multi-level flow rack 120B. Furthermore, the RTTP bot (for e.g., the first RTTP bot 118A) is configured to move in a to-and-fro direction 502 in the aisle region. In an implementation scenario, the first RTTP bot 118A is configured to move to a first location designated by the warehouse management server 108 before storing one or more storage totes of the first plurality of storage totes (i.e., the first storage tote 116A, the second storage tote 116B, and the third storage tote 116C) at a first position coordinate on the multi-level flow rack (e.g., the first multi-level flow rack 120A and the second multi-level flow rack 120B) under the control of the warehouse management server 108. Moreover, the one or more multi-level flow racks (e.g., the first multi-level flow rack 120A and the second multi-level flow rack 120B) are designed to optimize the storage and retrieval of the one or more storage totes in the forward pick area 104. As a result, the controller 110 is configured to facilitate an enhanced accessibility to store the one or more inventory items to enhance the accessibility of the one or more inventory items thereby ensuring an efficient and reliable storage of the one or more inventory items in order to improve the overall functionality of the system 100A of warehouse management.

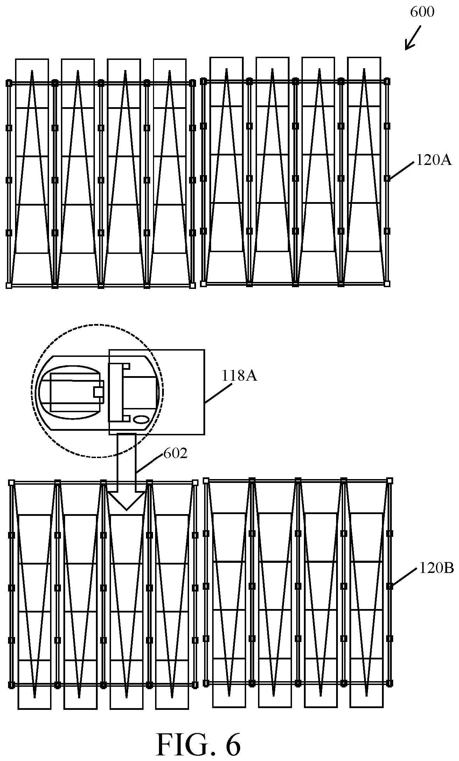

FIG. 6 is another diagram illustrating the movement of an RTTP bot to a first location designated by a warehouse management server, in accordance with an embodiment of the present disclosure. With reference to FIG. 6, there is shown a diagram 600 that depicts the first RTTP bot 118A to move to the first location designated by the warehouse management server 108.

In an implementation scenario, the first RTTP bot 118A is engaged in executing the storage tote put-away process into the multi-level flow rack (e.g., the second multi-level flow rack 120B) within the forward pick area 104. Moreover, the first RTTP bot 118A is configured to provide intelligent coordination between the first RTTP bot 118A within the system 100A for warehouse management to enhance the operational efficiency by streamlining the placement of the one or more storage totes into the multi-level flow rack (for e.g., the second multi-level flow rack 120B) and minimize the risk of misplacement or mishandling of the one or more storage totes thereby ensuring a strategic and organized arrangement that enhances the reliability and consistency in inventory management practices in the warehouse 102.

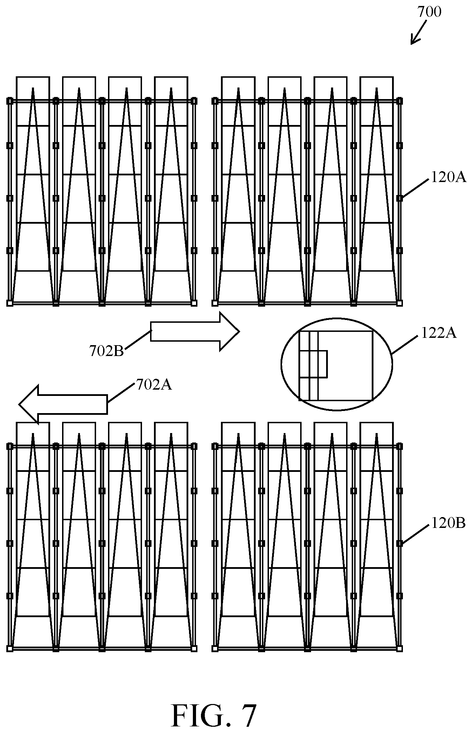

FIG. 7 is a diagram illustrating the movement of a RA bot around the aisle region corresponding to one or more specific pickup locations, in accordance with an embodiment of the present disclosure. With reference to FIG. 7, there is shown a diagram 700 depicting the movement of the first RA bot 122A around the aisle region corresponding to the one or more specific pickup locations in the forward pick area 104.

In an implementation scenario, the first RA bot 122A is configured to direct the RA bot toward a drop-off location associated with a tote exchange function. Moreover, the first RA bot 122A is configured to carry the at least one order tote comprising one or more second inventory items of the new order. Moreover, the controller 110 is configured to allocate the RA bot (i.e., the first RA bot 122A) from amongst a plurality of RA bots based on the availability and the proximity of the RA bot (i.e., the first RA bot 122A) to the one or more specific pickup locations in the forward pick area. In addition, the controller 110 is configured to cause the RA bot to move around a plurality of different aisle regions corresponding to the one or more specific pickup locations in the forward pick area 104 to engage with different operators operating the one or more operator devices in the forward pick area 104. By traversing between the first multi-level flow rack 120A and the second multi-level flow rack 120B, the RA bot (for e.g., the first RA bot 122A) is configured to engage with different sections of the forward pick area 104, ensuring comprehensive coverage for optimal mobility between the first multi-level flow rack 120A and the second multi-level flow rack 120B in the aisle region.

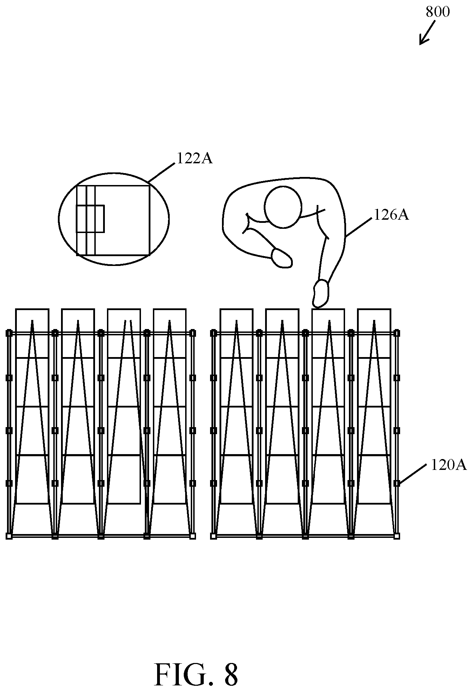

FIG. 8 is a diagram illustrating an operator and the RA bot coordinating to pick the one or more storage totes filled with inventory items from the multi-level flow rack, in accordance with an embodiment of the present disclosure. With reference to FIG. 8, there is shown a diagram 800 depicts the operator (for e.g., the first operator 126A) and the RA bot (for e.g., the first RA bot 122A) coordinating to pick the one or more storage totes filled with inventory items from the multi-level flow rack (for e.g., the first multi-level flow rack 120A).

In an implementation scenario, the controller 110 of the system 100A is configured to cause the first RA bot 122A to move around a plurality of different aisle regions corresponding to the one or more specific pickup locations in the forward pick area 104 to engage with different operators (i.e., the first operator 126A) operating the one or more operator devices in the forward pick area 104. The first operator 126A is configured to receive and execute instructions from the warehouse management server 108, after obtaining information about the pick-up location from the warehouse management server 108. The operators (i.e., the first operator 126A) are configured to reach the designated location (i.e., the one or more specific pickup locations) within the forward pick area 104 of the warehouse 102. The first operator 126A initiates picking based on the suggested pick information. Thereafter, the first operator 126A picks a unit from the one or more storage totes 116A (i.e., the first storage tote 116A, the second storage tote 116B, and the third storage tote 116C), scans the unit and drops the corresponding unit to the order tote. After that, the first RA bot 122A is configured to move the one or more storage totes (i.e., the first storage tote 116A, the second storage tote 116B, and the third storage tote 116C) to the next pick location and the next operator (i.e., the second operator 126B) is notified. As a result, the first RA bot 122A is configured to optimize the movement of the RA bot on the pick location. As a result, the controller 110 is configured to ensure timely and precise retrieval of the required storage totes, enhancing operational efficiency and reducing potential errors in the system 100A for warehouse management.

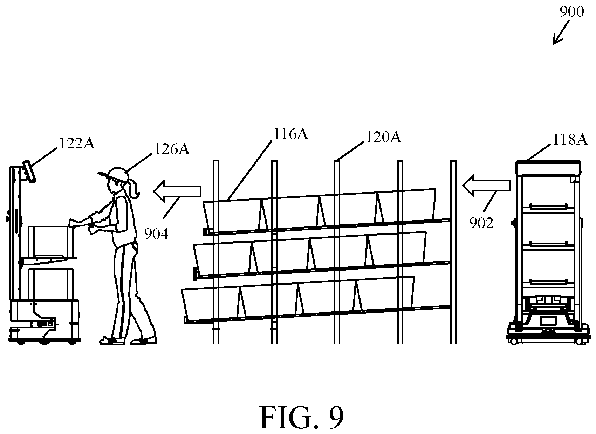

FIG. 9 is a diagram illustrating an exemplary scenario of the picking of the new order items and putting the corresponding order items into the ordered tote, in accordance with an embodiment of the present disclosure. With reference to FIG. 9, there is shown a diagram 900 depicting the first operator 126A picking the order items from the first storage tote 116A.

In an implementation scenario, the first RTTP bot 118A is configured to move to a first location designated by the warehouse management server 108 before storing one or more storage totes (i.e., the first storage tote 116A) of the first plurality of storage totes at a first position coordinate on the multi-level flow rack (i.e., the first multi-level flow rack 120A) under the control of the warehouse management server 108, such as at operation 902. Furthermore, at operation 904, the first RA bot 122A is configured to move around a plurality of different aisle regions corresponding to the one or more specific pickup locations in the forward pick area to engage with different operators (i.e., the first operator 126A) operating the one or more operator devices (e.g., a scanner, a mobile computer, or a tablet) in the forward pick area 104. As a result, the system 100A for warehouse management is configured to allow parallel order picking and maximizing productivity within the forward pick area 104.

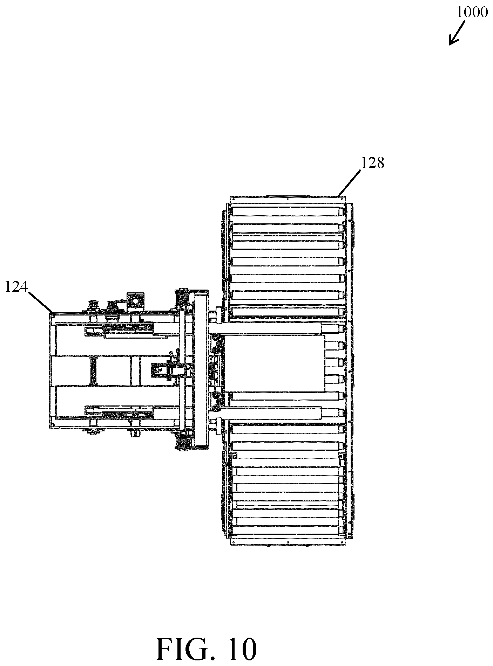

FIG. 10 is a diagram illustrating the top view of the auto tote exchanger connected with a multi-level take-away conveyor, in accordance with an embodiment of the present disclosure. With reference to FIG. 10, there is shown a diagram 1000 depicting the auto tote exchanger 124 connected with the multi-level take-away conveyor 128.

In an implementation scenario, the auto tote exchanger 124 refers to an automated system integrated into warehouse operations to optimize the exchange of the one or more storage totes during the order fulfillment process. The multi-level take-away conveyor 128 is designed with multiple levels to transport the one or more inventory items within the warehouse 102 used to facilitate the movement of the one or more inventory items from one location to another, often connecting different areas or levels within the warehouse 102. The auto tote exchanger 124 is configured to operate at the drop-off location to execute the tote exchange function in which the at least one order tote is collected from the RA bot and automatically exchanged with an empty tote acquired from the multi-level take-away conveyor 128. As a result, the auto tote exchanger 124 connected with the multi-level take-away conveyor 128 is configured to ensure a seamless and automated exchange of totes within the system 100A for the warehouse management that enhances the overall efficiency of the warehouse operations.

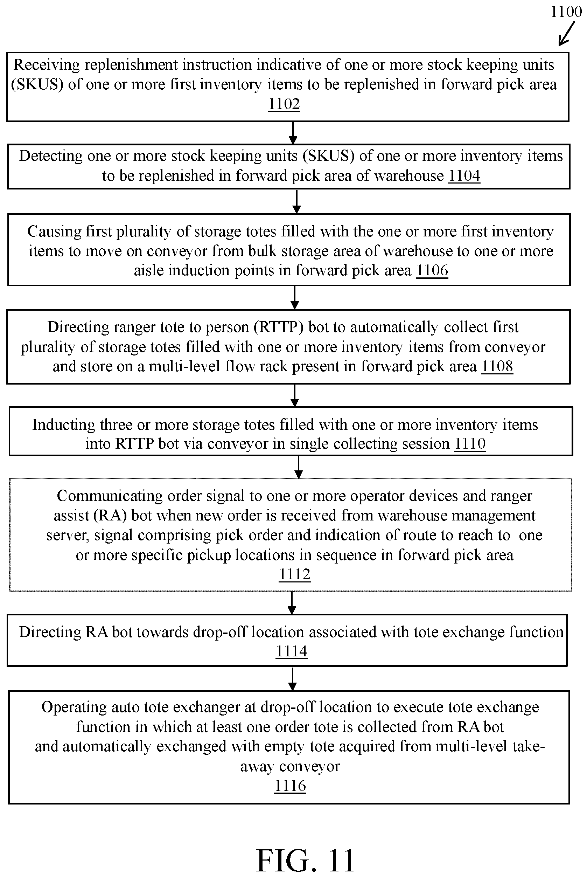

FIG. 11 is a flowchart of a method of warehouse management for replenishing and picking inventory in a forward pick area of a warehouse, in accordance with an embodiment of the present disclosure. FIG. 11 is described in conjunction with elements from FIGs. 1A, 1B, up to 10. With reference to FIG. 11, there is shown a flowchart of a method 1100 that includes the steps 1102-to-1116. The controller 110 (of FIG. 1) is configured to execute the method 1100.

There is provided the method 1100 of warehouse management for replenishing and picking inventory in the forward pick area 104 of the warehouse 102. In other words, the method 1100 is used for replenishing and picking inventory in the forward pick area 104 of the warehouse 102 with reduced overall time consumption with precise and an efficient placement of the storage totes on multi-level flow racks. Moreover, the method 1100 is used to achieve a throughput of 150 dual tote cycles per hour per unit is achieved thereby ensuring a high volume of efficient and timely replenishing and picking activities within the warehouse 102.

At 1102, the method 1100 includes receiving a replenishment instruction indicative of one or more stock-keeping units (SKUs) of one or more inventory items to be replenished in the forward pick area 104. At 1104, the method 1100 includes detecting the one or more stock-keeping units (SKUs) of the one or more inventory items to be replenished in the forward pick area 104 of the warehouse 102. At 1106, the method 1100 includes causing a first plurality of storage totes filled with the one or more inventory items to move on the conveyor 114 from the bulk storage area 106 of the warehouse 102 to one or more aisle induction points in the forward pick area 104.

At 1108, the method 1100 includes directing the Ranger Tote to Person (RTTP) bot to automatically collect the first plurality of storage totes filled with the one or more inventory items from the conveyor and store the one or more inventory items on a multi-level flow rack present in the forward pick area 104. At step 1110, the method 1100 includes inducting three or more storage totes filled with the one or more inventory items into the RTTP bot via the conveyor in a single collecting session.

In accordance with an embodiment, the method 1100 further includes causing the RTTP bot to move to a first location designated by the warehouse management server before storing one or more storage totes of the first plurality of storage totes at a first position coordinated on the multi-level flow rack under the control of the warehouse management server 108.

In accordance with an embodiment, the method 1100 further includes allocating the RA bot from amongst a plurality of RA bots based on the availability and a proximity of the RA bot to the one or more specific pickup locations in the forward pick area 104.

At 1112, the method 1100 includes communicating an order signal to one or more operator devices and a Ranger Assist (RA) bot when a new order is received from the warehouse management server 108, the signal comprising a pick order and an indication of a route to reach to one or more specific pickup locations in a sequence in the forward pick area 104. At 1114, the method 1100 includes directing the RA bot toward a drop-off location associated with a tote exchange function. Moreover, the RA bot carries the at least one order tote comprising one or more second inventory items of the new order.

In accordance with an embodiment, the method 1100 further includes the RA bot moving around a plurality of different aisle regions corresponding to the one or more specific pickup locations in the forward pick area to engage with different operators operating the one or more operator devices in the forward pick area 104. By directing the RTTP bot to move to a first location as designated by the warehouse management server 108 before storing the storage totes, the method 1100 is configured to ensure an organized and systematic placement of the different types of inventory items.

At 1116, the method 1100 includes operating the auto tote exchanger 124 at the drop-off location to execute the tote exchange function in which the at least one order tote is collected from the RA bot and automatically exchanged with an empty tote acquired from the multi-level take-away conveyor 128.

In accordance with an embodiment, the method 1100 further includes collecting, by the auto tote exchanger 124, the at least one order tote at a first fork from the RA bot. Moreover, the auto tote exchanger 124 includes the first fork and a second fork disposed over the first fork, and the first fork and the second fork are vertically movable in the auto tote exchanger 124 with respect to each other.

In accordance with an embodiment, the method 1100 further includes collecting, by the auto tote exchanger 124, the empty tote at the second fork from the multi-level take-away conveyor 128. By collecting the empty tote by the second fork from the multi-level take-away conveyor 128, the system 100A is configured to ensure a smooth transition between processing orders and preparing totes for future use.

In accordance with an embodiment, the method 1100 further includes adjusting the height of the second fork of the auto tote exchanger 124 until the height of the second fork is on the same level as the height of the RA bot to push the collected empty tote onto the RA bot. By aligning the height of the second fork with that of the RA bot, the system 100A ensures that the empty tote can be efficiently and accurately pushed onto the RA bot to optimize the tote exchange process, reducing the risk of errors, and enhancing overall efficiency.

In accordance with an embodiment, the method 1100 further includes placing, by the auto tote exchanger 124, the at least one order tote collected at the first fork at a first level of the multi-level take-away conveyor to reach to a packing station. By placing the at least one order tote collected at the first fork at the first level of the multi-level take-away conveyor 128, the system 100A is configured to allow the seamless transition of totes to the packing station.

Advantageously, the movement of the one or more storage totes from the bulk storage area 106 to the forward pick area 104 streamlines the replenishment process with reduced time and effort that is required for restocking the one or more inventory items, leading to an increased efficiency. The RTTP bot is configured to handle the one or more storage totes with an improved efficiency and reduced workforce. The method 1100 is used to minimize errors and the utilization of multi-level flow racks and take-away conveyors optimizes space utilization in order to facilitate smooth and reliable movement of the one or more inventory items within the forward pick area 104.

Certain embodiments of the disclosure may be found in a system of warehouse management for replenishing and picking inventory in the forward pick area 104. Various embodiments of the disclosure may provide the system that includes the warehouse management server 108. While the present disclosure is described with reference to certain embodiments, it will be understood by those skilled in the art that various changes may be made, and equivalents may be substituted without departing from the scope of the present disclosure. Additionally, many modifications may be made to adapt a particular situation or material to the teachings of the present disclosure without departing from its scope. Therefore, it is intended that the present disclosure is not limited to the particular embodiment disclosed, but that the present disclosure will include all embodiments that fall within the scope of the appended claims. Equivalent elements, materials, processes, or steps may be substituted for those representatively illustrated and described herein. Moreover, certain features of the disclosure may be utilized independently of the use of other features, all as would be apparent to one skilled in the art after having the benefit of this description of the disclosure.

As used herein, the terms "comprises," "comprising," "includes," "including," "has," "having" or any contextual variants thereof, are intended to cover a non-exclusive inclusion. For example, a process, product, article, or apparatus that comprises a list of elements is not necessarily limited to only those elements but may include other elements not expressly listed or inherent to such process, product, article, or apparatus. Further, unless expressly stated to the contrary, "or" refers to an inclusive or and not to an exclusive or. For example, a condition "A or B" is satisfied by any one of the following: A is true (or present), and B is false (or not present), A is false (or not present) and B is true (or present), and both A and B is true (or present).

Although the steps, operations, or computations may be presented in a specific order, this order may be changed in different embodiments. In some embodiments, to the extent multiple steps are shown as sequential in this specification, some combination of such steps in alternative embodiments may be performed at the same time. The sequence of operations described herein can be interrupted, suspended, reversed, or otherwise controlled by another process. It will also be appreciated that one or more of the elements depicted in the drawings/figures can also be implemented in a more separated or integrated manner, or even removed or rendered as inoperable in certain cases, as is useful in accordance with a particular application.

### Additional Clauses

What is claimed is:
1. A method of warehouse management for replenishing and picking inventory in a forward pick area of a warehouse, the method comprising:
   receiving a replenishment instruction indicative of one or more stock keeping units (SKUs) of one or more inventory items to be replenished in the forward pick area;
   causing a first plurality of storage totes filled with the one or more inventory items to move on a conveyor from a bulk storage area of the warehouse to one or more aisle induction points in the forward pick area;
   directing a Ranger Tote to Person (RTTP) bot to automatically collect the first plurality of storage totes filled with the one or more inventory items from the conveyor and store on a multi-level flow rack present in the forward pick area;
   communicating an order signal to one or more operator devices and a Ranger Assist (RA) bot when a new order is received from a warehouse management server, the signal comprising a pick order and an indication of a route to reach to one or more specific pickup locations in a sequence in the forward pick area;
   directing the RA bot towards a drop-off location associated with a tote exchange function, wherein the RA bot carries the at least one order tote comprising one or more second inventory items of the new order; and
   operating an auto tote exchanger at the drop-off location to execute the tote exchange function in which the at least one order tote is collected from the RA bot and automatically exchanged with an empty tote acquired from a multi-level take-away conveyor.
2. The method according to claim 1, further comprising detecting the one or more stock keeping units (SKUs) of the one or more inventory items to be replenished in the forward pick area of the warehouse.
3. The method according to claim 1, further comprising inducting three or more storage totes filled with the one or more inventory items into the RTTP bot via the conveyor in a single collecting session.
4. The method according to claim 1, further comprising causing the RTTP bot to move to a first location designated by the warehouse management server before storing one or more storage totes of the first plurality of storage totes at a first position coordinate on the multi-level flow rack under the control of the warehouse management server.
5. The method according to claim 1, further comprising batching order lines based on a proximity of locations of the SKUs of the one or more inventory items within the same order for the order pick or batching orderliness of picking the SKUs of the one or more inventory items for a batch pick.
6. The method according to claim 1, further comprising causing the RA bot to move around a plurality of different aisle regions corresponding to the one or more specific pickup locations in the forward pick area to engage with different operators operating the one or more operator devices in the forward pick area.
7. The method according to claim 1, further comprising collecting, by the auto tote exchanger, the at least one order tote at a first fork from the RA bot, wherein the auto tote exchanger comprises the first fork and a second fork disposed over the first fork, and wherein the first fork and the second fork are vertically movable in the auto tote exchanger with respect to each other.
8. The method according to claim 7, further comprising collecting, by the auto tote exchanger, the empty tote at the second fork from the multi-level take-away conveyor.
9. The method according to claim 8, further comprising adjusting a height of the second fork of the auto tote exchanger until a height of the second fork is on the same level as the height of the RA bot to push the collected empty tote onto the RA bot.
10. The method according to claim 7, further comprising placing, by the auto tote exchanger, the at least one order tote collected at the first fork at a first level of the multi-level take-away conveyor to reach to a packing station.
11. A system of warehouse management for replenishing and picking inventory in a forward pick area of a warehouse, the system comprising:
   an auto tote exchanger; and
   a controller configured to:
      receive a replenishment instruction indicative of one or more stock keeping units (SKUs) of one or more inventory items to be replenished in the forward pick area;
      cause a first plurality of storage totes filled with the one or more inventory items to move on a conveyor from a bulk storage area of the warehouse to one or more aisle induction points in the forward pick area;
      direct a Ranger Tote to Person (RTTP) bot to automatically collect the first plurality of storage totes filled with the one or more inventory items from the conveyor and store on a multi-level flow rack present in the forward pick area;
      communicate an order signal to one or more operator devices and a Ranger Assist (RA) bot when a new order is received from a warehouse management server, the signal comprising a pick order and an indication of a route to reach to one or more specific pickup locations in a sequence in the forward pick area;
      direct the RA bot towards a drop-off location associated with a tote exchange function, wherein the RA bot carries the at least one order tote comprising one or more second inventory items of the new order; and
      operate the auto tote exchanger at the drop-off location to execute the tote exchange function in which the at least one order tote is collected from the RA bot and automatically exchanged with an empty tote acquired from a multi-level take-away conveyor.
12. The system according to claim 11, wherein the controller is further configured to detect the one or more stock keeping units (SKUs) of the one or more inventory items to be replenished in the forward pick area of the warehouse.
13. The system according to claim 11, wherein the controller is further configured to cause the RTTP bot to induct three or more storage totes filled with the one or more inventory items into the RTTP bot via the conveyor in a single collecting session.
14. The system according to claim 11, wherein the controller is further configured to cause the RTTP bot to move to a first location designated by the warehouse management server before storing one or more storage totes of the first plurality of storage totes at a first position coordinate on the multi-level flow rack.
15. The system according to claim 11, wherein the controller is further configured to batch order lines based on a proximity of locations of the SKUs of the one or more inventory items within the same order for the order pick or batch orderliness of picking the SKUs of the one or more inventory items for a batch pick.
16. The system according to claim 11, wherein the controller is further configured to cause the RA bot to move around a plurality of different aisle regions corresponding to the one or more specific pickup locations in the forward pick area to engage with different operators operating the one or more operator devices in the forward pick area.
17. The system according to claim 11, wherein the auto tote exchanger comprises a first fork and a second fork disposed over the first fork, and wherein the first fork and the second fork are vertically movable in the auto tote exchanger with respect to each other, and wherein the at least one order tote is collected at the first fork from the RA bot by the auto tote exchanger.
18. The system according to claim 17, wherein the auto tote exchanger is further configured to collect the empty tote at the second fork from the multi-level take-away conveyor.
19. The system according to claim 18, wherein the auto tote exchanger is further configured to adjust a height of the second fork of the auto tote exchanger until a height of the second fork is on the same level as the height of the RA bot to push the collected empty tote onto the RA bot.
20. The system according to claim 17, wherein the auto tote exchanger is further configured to place the at least one order tote collected at the first fork at a first level of the multi-level take-away conveyor to reach a packing station.

## Claims

1. A method (1100) of warehouse management for replenishing and picking inventory in a forward pick area (104) of a warehouse (102), the method (1100) comprising:
receiving (1102) a replenishment instruction indicative of one or more stock keeping units (SKUs) of one or more inventory items to be replenished in the forward pick area (104);
causing (1106) a first plurality of storage totes (116A) filled with the one or more inventory items to move on a conveyor (114) from a bulk storage area (106) of the warehouse (102) to one or more aisle induction points in the forward pick area (104);
directing (1108) a Ranger Tote to Person (RTTP) bot to automatically collect the first plurality of storage totes (116A) filled with the one or more inventory items from the conveyor (114) and store on a multi-level flow rack present in the forward pick area (104);
communicating (1112) an order signal to one or more operator devices and a Ranger Assist (RA) bot when a new order is received from a warehouse management server (108), the signal comprising a pick order and an indication of a route to reach to one or more specific pickup locations in a sequence in the forward pick area (104);
directing (1114) the RA bot towards a drop-off location associated with a tote exchange function, wherein the RA bot carries the at least one order tote comprising one or more second inventory items of the new order; and
operating (1116) an auto tote exchanger (124) at the drop-off location to execute the tote exchange function in which the at least one order tote is collected from the RA bot and automatically exchanged with an empty tote acquired from a multi-level take-away conveyor (128).

2. The method (1100) according to claim 1, further comprising detecting the one or more stock keeping units (SKUs) of the one or more inventory items to be replenished in the forward pick area (104) of the warehouse (102).

3. The method (1100) according to claim 1, further comprising inducting three or more storage totes filled with the one or more inventory items into the RTTP bot via the conveyor (114) in a single collecting session.

4. The method (1100) according to claim 1, further comprising causing the RTTP bot to move to a first location designated by the warehouse management server (108) before storing one or more storage totes of the first plurality of storage totes (116A) at a first position coordinate on the multi-level flow rack under the control of the warehouse management server (108).

5. The method (1100) according to claim 1, further comprising batching order lines based on a proximity of locations of the SKUs of the one or more inventory items within the same order for the order pick or batching orderliness of picking the SKUs of the one or more inventory items for a batch pick.

6. The method (1100) according to claim 1, further comprising causing the RA bot to move around a plurality of different aisle regions corresponding to the one or more specific pickup locations in the forward pick area (104) to engage with different operators operating the one or more operator devices in the forward pick area (104).

7. The method (1100) according to any one of claims 1 to 6, wherein the auto tote exchanger (124) comprises a first fork and a second fork disposed over the first fork, wherein the first fork and the second fork are vertically movable in the auto tote exchanger (124) with respect to each other, wherein the method further comprising:
collecting, by the auto tote exchanger (124), the at least one order tote at the first fork from the RA bot; and
collecting, by the auto tote exchanger (124), the empty tote at the second fork from the multi-level take-away conveyor (128).

8. The method according to claim 7, further comprising:
adjusting a height of the second fork of the auto tote exchanger (124) until a height of the second fork is on the same level as the height of the RA bot to push the collected empty tote onto the RA bot; and
placing, by the auto tote exchanger (124), the at least one order tote collected at the first fork at a first level of the multi-level take-away conveyor (128) to reach to a packing station.

9. A system (100A) of warehouse management for replenishing and picking inventory in a forward pick area (104) of a warehouse (102), the system (100A) comprising:
an auto tote exchanger (124); and
a controller (110) configured to:
receive a replenishment instruction indicative of one or more stock keeping units (SKUs) of one or more inventory items to be replenished in the forward pick area (104);
cause a first plurality of storage totes (116A) filled with the one or more inventory items to move on a conveyor (114) from a bulk storage area (106) of the warehouse (102) to one or more aisle induction points in the forward pick area (104);
direct a Ranger Tote to Person (RTTP) bot to automatically collect the first plurality of storage totes (116A) filled with the one or more inventory items from the conveyor (114) and store on a multi-level flow rack present in the forward pick area (104);
communicate an order signal to one or more operator devices and a Ranger Assist (RA) bot when a new order is received from a warehouse management server (108), the signal comprising a pick order and an indication of a route to reach to one or more specific pickup locations in a sequence in the forward pick area (104);
direct the RA bot towards a drop-off location associated with a tote exchange function, wherein the RA bot carries the at least one order tote comprising one or more second inventory items of the new order; and
operate the auto tote exchanger (124) at the drop-off location to execute the tote exchange function in which the at least one order tote is collected from the RA bot and automatically exchanged with an empty tote acquired from a multi-level take-away conveyor (128).

10. The system (100A) according to claim 9, wherein the controller is further configured to detect the one or more stock keeping units (SKUs) of the one or more inventory items to be replenished in the forward pick area (104) of the warehouse (102).

11. The system (100A) according to claim 9, wherein the controller (110) is further configured to cause the RTTP bot to induct three or more storage totes filled with the one or more inventory items into the RTTP bot via the conveyor (114) in a single collecting session.

12. The system (100A) according to claim 9, wherein the controller (110) is further configured to cause the RTTP bot to move to a first location designated by the warehouse management server (108) before storing one or more storage totes of the first plurality of storage totes (116A) at a first position coordinate on the multi-level flow rack.

13. The system (100A) according to claim 9, wherein the controller (110) is further configured to batch order lines based on a proximity of locations of the SKUs of the one or more inventory items within the same order for the order pick or batch orderliness of picking the SKUs of the one or more inventory items for a batch pick.

14. The system (100A) according to claim 9, wherein the controller (110) is further configured to cause the RA bot to move around a plurality of different aisle regions corresponding to the one or more specific pickup locations in the forward pick area (104) to engage with different operators operating the one or more operator devices in the forward pick area (104).

15. The system (100A) according to any one of claims 9 to 14, wherein the auto tote exchanger (124) comprises a first fork and a second fork disposed over the first fork, wherein the first fork and the second fork are vertically movable in the auto tote exchanger (124) with respect to each other, and wherein the auto tote exchanger (124) is further configured to:
collect the at least one order tote at the first fork from the RA bot;
collect the empty tote at the second fork from the multi-level take-away conveyor (128);
adjust a height of the second fork of the auto tote exchanger (124) until a height of the second fork is on the same level as the height of the RA bot to push the collected empty tote onto the RA bot; and
place the at least one order tote collected at the first fork at a first level of the multi-level take-away conveyor (128) to reach a packing station.
